# EUROPEAN PATENT APPLICATION

(11) **EP 3 467 706 A1**
(43) Date of publication of application: **10.04.2019**
(21) Application number: 17912342.7
(22) Date of filing: 14.08.2017
(51) Int. Cl.: G06K 9/00

(54) **TERMINAL DEVICE**

(71) Applicant: Shenzhen Goodix Technology Co., Ltd., Shenzhen, Guangdong 518045 (CN)
(72) Inventor: WANG, Yudong, Shenzhen Guangdong 518045 (CN); ZHANG, Xingguo, Shenzhen Guangdong 518045 (CN); HUANG, Ruilang, Shenzhen Guangdong 518045 (CN)
(74) Representative: AWA Denmark A/S
(86) International application number: PCT/CN2017/097373
(87) International publication number: WO 2019/033236

(57) **Abstract**

A terminal device (130) is provided. The terminal device (130) includes: at least one fingerprint sensing module (131, 132) disposed on at least one side face of the terminal device (130), where each fingerprint sensing module (131, 132) of the at least one fingerprint sensing module (131, 132) is configured to acquire fingerprint information; and a processor (133) connected to the at least one fingerprint sensing module (131, 132) and configured to perform fingerprint identification according to fingerprint information acquired by one or more fingerprint sensing module (131, 132) of the at least one fingerprint sensing module (131, 132). A fingerprint sensing module (131, 132) is disposed on a side face of a terminal device (130), thereby effectively improving user experience.

## Description

### TECHNICAL FIELD

The present disclosure relates to the technical field of biometric identification, and in particular, to a terminal device.

### BACKGROUND

Fingerprint identification function has become standard configuration for smart phones. As consumers' requirements for appearance and security of mobile phones are getting higher and higher, the current mainstream fingerprint identification scheme cannot satisfy the requirements already. Especially with the emergence of all screen, people's demand for a smart phone with a high screen-to-body ratio is becoming more and more urgent.

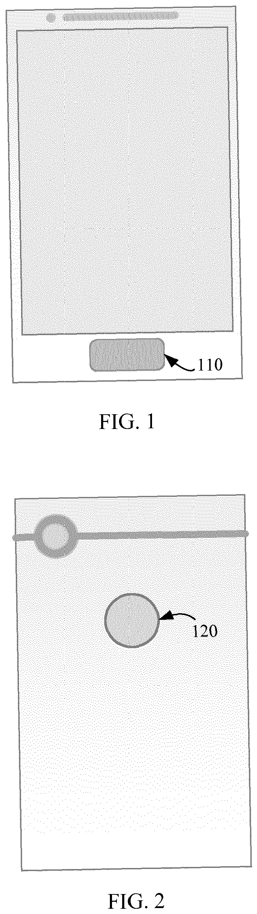

At present, the mainstream fingerprint identification scheme mainly includes a front fingerprint identification method and a rear fingerprint identification method. Specifically, design of the front fingerprint identification method is as shown in FIG. 1 (110 denotes an area pressed by a user's finger), and user experience of the front fingerprint identification method is better, but a screen-to-body ratio is limited; meanwhile, design of the rear fingerprint identification method is as shown in FIG. 2 (120 denotes an area pressed by a user's finger), and although the rear fingerprint identification method does not affect the screen-to-body ratio, but the user experience is poorer.

Therefore, in the technical field of biometric identification, a fingerprint identification method with high user experience is urgently needed, especially for smart phones or other handheld devices.

### SUMMARY

Provided is a terminal device which could improve user experience effectively.

In a first aspect, provided is a terminal device including:
at least one fingerprint sensing module disposed on at least one side face of the terminal device, where each of the at least one fingerprint sensing module is configured to acquire fingerprint information; and
a processor connected to the at least one fingerprint sensing module and configured to perform fingerprint identification according to fingerprint information acquired by one or more of the at least one fingerprint sensing module.

The technical solution in an embodiment of the present disclosure could effectively increase a screen-to-body ratio with respect to a front fingerprint identification method, and could effectively improve user experience with respect to a rear fingerprint identification method. In particular, when a fingerprint sensing module is installed on both sides of a terminal device, not only could a screen-to-body ratio be made maximized, but also a cracking difficulty could be increased, and security could be improved.

In some possible implementations, the terminal device further includes:
at least one pressure sensing module, where each pressure sensing module is adjacent to a fingerprint sensing module of the at least one fingerprint sensing module and is in an inner side of an adjacent fingerprint sensing module, and is configured to receive pressure transmitted by the adjacent fingerprint sensing module.

In an embodiment of the present disclosure, a pressure sensing module may be disposed on a side face of a terminal device to replace a mechanical button for volume adjustment, brightness adjustment and the like in an existing product, thereby improving user experience and reducing waterproof design difficulty.

In some possible implementations, the at least one pressure sensing module is in one-to-one correspondence with the at least one fingerprint sensing module.

In some possible implementations, the terminal device further includes:
at least one signal processing module, where the at least one pressure sensing module is connected to the processor through the at least one signal processing module, and each of the at least one signal processing module is configured to convert a pressure signal output by a pressure sensing module into an electrical signal, so that the processor generates an instruction according to the electrical signal converted by the at least one signal processing module.

In an embodiment of the present disclosure, an electrical signal converted by a signal processing module is associated with an instruction of a terminal device, thereby solving a problem of a single function of a mechanical button effectively, and further, improving user experience effectively.

In some possible implementations, the at least one pressure sensing module is in one-to-one correspondence with the at least one signal processing module, or the number of the at least one pressure sensing module is greater than the number of the at least one signal processing module.

In some possible implementations, one or more of the at least one signal processing module are integrally disposed with one or more of the at least one fingerprint sensing module.

In some possible implementations, each of the at least one pressure sensing module includes at least one pressure sensor.

In an embodiment of the present disclosure, a plurality of pressure sensors are disposed in a pressure sensing module, thereby further enrich triggerable instructions of the pressure sensing module, and moreover, improving user experience effectively.

In some possible implementations, the instruction is generated by the processor according to an electrical signal converted by the at least one signal processing module and mapping relationship information, where the mapping relationship information includes a correspondence between a plurality of electrical signals and a plurality of instructions, and the plurality of electrical signals include the electrical signal converted by the at least one signal processing module.

In some possible implementations, the plurality of instructions include: at least one volume adjustment instruction, at least one screen brightness adjustment instruction, and at least one application operation instruction.

In some possible implementations, the at least one application operation instruction includes: a camera photographing instruction, a camera focus instruction, and a screen shot instruction.

In some possible implementations, the processor is configured to:
generate a screen unlocking instruction or an application decrypting instruction when the fingerprint information acquired by the one or more of the at least one fingerprint sensing module matches recorded fingerprint information;
   or,
generate a payment instruction when the fingerprint information acquired by each of the at least one fingerprint sensing module matches recorded fingerprint information.

In some possible implementations, the at least one fingerprint sensing module is two fingerprint sensing modules, and two pressure sensing modules of the terminal device are located in inner sides of the two fingerprint sensing modules, respectively.

In a second aspect, provided is a terminal device including: a processor and a memory, where the memory is configured to store a computer program (also referred to as a code, or an instruction) including the instruction involved in the terminal device in the above first aspect or any one of the possible implementations in the first aspect, and the processor is configured to invoke and execute the computer program from the memory.

In some possible implementations, the processor is one or more processors, and the memory is one or more memories.

In some possible implementations, the memory may be integrated with the processor, or the memory may be disposed separately from the processor.

In a third aspect, provided is a computer readable medium for storing a computer program (also referred to as a code, or an instruction) including the instruction involved in the terminal device in the above first aspect or any one of possible implementations in the first aspect.

In a fourth aspect, provided is a computer program product including a computer program (also referred to as a code, or an instruction) including the instruction involved in the terminal device in the above first aspect or any one of possible implementations in the first aspect.

### BRIEF DESCRIPTION OF DRAWINGS

FIG. 1 is a schematic diagram of a design of a front fingerprint identification method in the prior art.
FIG. 2 is a schematic diagram of a design of a rear fingerprint identification method in the prior art.
FIG. 3 is a front view of a terminal device according to an embodiment of the present disclosure.
FIG. 4 is another front view of a terminal device according to an embodiment of the present disclosure.
FIG. 5 is a right side view of FIG. 4.
FIG. 6 is a schematic block diagram of a terminal device according to an embodiment of the present disclosure.
FIG. 7 is another schematic block diagram of a terminal device according to an embodiment of the present disclosure.
FIG. 8 is yet another schematic block diagram of a terminal device according to an embodiment of the present disclosure.
FIG. 9 is yet another schematic block diagram of a terminal device according to an embodiment of the present disclosure.

### DESCRIPTION OF EMBODIMENTS

Technical solutions in embodiments of the present disclosure will be described below with reference to the accompanying drawings.

It should be understood that a terminal device in an embodiment of the present disclosure may be any terminal device that needs to perform fingerprint acquisition, especially in an occasion where demands for security and user experience are higher, for example, a smart phone, a personal digital assistant (Personal Digital Assistant, PDA), an electronic book (electronic book, E-book) and other handheld devices. For ease of understanding, as an example and not by way of limitation, description is given below by taking a smart phone as an example.

A novel fingerprint identification method and a human-computer interaction scheme are provided in an embodiment of the present disclosure.

Specifically, fingerprint acquisition is implemented by installing a fingerprint sensing module on a side face of a mobile phone. The technical solution in an embodiment of the present disclosure could effectively increase a screen-to-body ratio with respect to a front fingerprint identification method, and could effectively improve user experience with respect to a rear fingerprint identification method. In addition, since a conventional single fingerprint identification scheme is very easy to be cracked by a fabricated fake fingerprint film, the technical solution in the embodiment of the present disclosure could also separately install a fingerprint sensing module on both sides of a mobile phone, which could effectively improve a difficulty in cracking a fingerprint, and further, improve security of the mobile phone.

As an embodiment, the terminal device includes: at least one fingerprint sensing module disposed on at least one side face of the terminal device, where each of the at least one fingerprint sensing module is configured to acquire fingerprint information; and a processor connected to the at least one fingerprint sensing module and configured to perform fingerprint identification according to fingerprint information acquired by one or more of the at least one fingerprint sensing module.

For example, the terminal device may include two fingerprint sensing modules, that is, the above at least one fingerprint sensing module is two fingerprint sensing modules, and two side faces of the terminal device are provided with one fingerprint sensing module, respectively.

It can be understood that at least one side face of the terminal device may be any face perpendicular to a display screen of the terminal device. For example, when a front view of the terminal device is a rectangle, a side face of the terminal device may be a side face perpendicular to the display screen of the terminal device where a long edge of the display screen of the terminal device is located, and may also be a side face perpendicular to the display screen of the terminal device where a short edge of the display screen of the terminal device is located.

In an embodiment of the present disclosure, a processor is mainly used to control the entire terminal device, execute a software program, and process data of the software program.

Specifically, after the terminal device starts up, the processor may read the software program in a storage unit, interpret and execute instructions of the software program, and process the data of the software program. For example, the processor may perform fingerprint identification according to fingerprint information acquired by one or more of the at least one fingerprint sensing module. Specifically, the processor may match the fingerprint information acquired by the one or more of the at least one fingerprint sensing module with recorded fingerprint information, and execute a system instruction or an application operation instruction after the matching is successful.

For example, the processor may generate a screen unlocking instruction or an application decrypting instruction when the fingerprint information acquired by the one or more of the at least one fingerprint sensing module matches recorded fingerprint information. For another example, the processor may generate a payment instruction when the fingerprint information acquired by each of the at least one fingerprint sensing module matches recorded fingerprint information.

In an embodiment of the present disclosure, when a fingerprint sensing module is installed on both sides of a terminal device, not only could a screen-to-body ratio be maximized, but also a cracking difficulty could be increased and security could be improved.

The design method of a fingerprint sensing module will be described below with reference to the accompanying drawings.

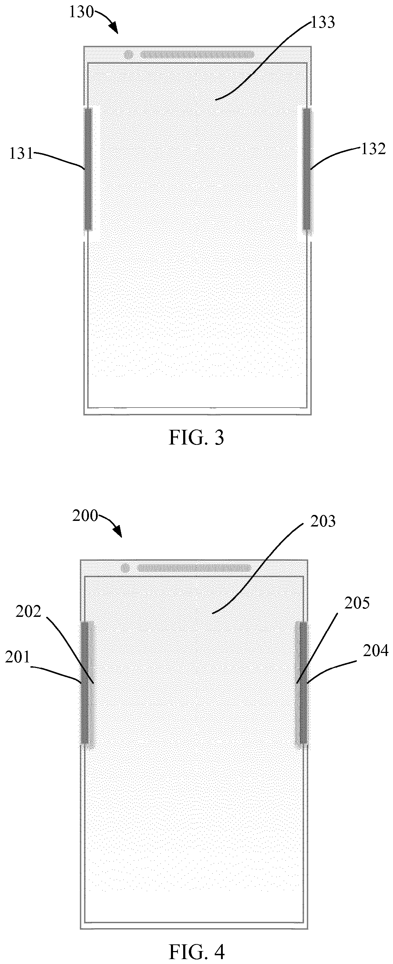

FIG. 3 is a front view of a terminal device 130 according to an embodiment of the present application.

As shown in FIG. 3, the terminal device 130 includes:
a first fingerprint sensing module 131, a second fingerprint sensing module 132 and a processor 133, where the first fingerprint sensing module 131 and the second fingerprint sensing module 132 are disposed on two side faces of the terminal device respectively, and the first fingerprint sensing module 131 and the second fingerprint sensing module 132 are configured to acquire fingerprint information respectively; and the processor 133 is connected to the first fingerprint sensing module 131 and the second fingerprint sensing module 132 respectively, and configured to perform fingerprint identification according to the fingerprint information acquired by the fingerprint sensing module 131 and the second fingerprint sensing module 132.

It should be understood that FIG. 3 is merely a schematic diagram of an embodiment of the present disclosure. The technical solution of an embodiment of the present disclosure is not limited to FIG. 3. For example, a terminal device in an embodiment of the present disclosure may include more than two fingerprint sensing modules, or may include one fingerprint sensing module. For another example, one or more fingerprint sensing modules may be provided on one side face of a terminal device in an embodiment of the present disclosure. For another example, a fingerprint sensing module in an embodiment of the present disclosure may further be disposed on an upper side face (top) or a lower side face (bottom) of a terminal device, or the like.

It should also be understood that a fingerprint sensing module in an embodiment of the present disclosure includes but is not limited to: a radio frequency fingerprint module, an optical fingerprint module, and a semiconductor fingerprint module.

For example, a fingerprint sensing module in an embodiment of the present disclosure may be an optical fingerprint module, that is, fingerprint information may be acquired using principles of refraction and reflection of light. For another example, a fingerprint sensing module in an embodiment of the present disclosure may be a semiconductor fingerprint module, for example, a capacitive fingerprint module and an inductive fingerprint module, that is, fingerprint acquisition is accomplished by sensing a charge. For another example, a fingerprint sensing module in an embodiment of the present disclosure may be a radio frequency fingerprint module, that is, by using a bio-radio frequency fingerprint identification technology, a minute amount of radio frequency signal is emitted through a sensor itself, and an epidermal layer of a finger is penetrated to detect texture of an inner layer so as to obtain fingerprint information.

It should be noted that in the current market products, a common mobile phone provided some mechanical buttons on a side face of the mobile phone, for example, a volume button, a power button, and a photographing button, however, these mechanical buttons generally only have two pressing states so that diversified interaction cannot be achieved, and user experience is poorer. Moreover, mechanical buttons are very easy to be damaged, and a waterproof design of the whole machine is also difficult.

In an embodiment of the present disclosure, a pressure sensing module may be disposed on a side face of a terminal device to replace a mechanical button for volume adjustment, brightness adjustment and the like in an existing product, thereby improving user experience and reducing waterproof design difficulty.

As an embodiment, the terminal device may include: at least one pressure sensing module, where each pressure sensing module is adjacent to a fingerprint sensing module of the at least one fingerprint sensing module and is in an inner side of an adjacent fingerprint sensing module, and configured to receive pressure transmitted by the adjacent fingerprint sensing module.

For example, the terminal device may include two fingerprint sensing modules, and two pressure sensing modules of the terminal device are located in inner sides of the two fingerprint sensing modules, respectively.

When a user performs an operation, a pressure sensing module may sense a sensing signal, and the user may associate the sensing signal with a trigger instruction of an original mechanical button by software. For example, the terminal device may be provided with two pressure sensing modules, where a sensing signal of one pressure sensing module may be used to trigger a volume down instruction, and a sensing signal of the other pressure sensing module may be used to trigger a volume up instruction, or the like.

Optionally, one or more of the above at least one pressure sensing module may further include at least one pressure sensor.

For example, assuming that the above at least one pressure sensing module is provided with a pressure sensing module for triggering a volume adjustment instruction, the pressure sensing module for triggering the volume adjustment instruction may include two pressure sensors, where one pressure sensor is used to trigger a volume up instruction, while the other pressure sensor is used to trigger a volume down instruction; and furthermore, specific pressure data detected by each pressure sensor may further be associated with an amplitude of volume adjustment, for example, when a sensing value sensed by the pressure sensor for triggering the volume down instruction is 1 mv, a volume of a terminal device is turned down by one step; and when a sensing value is 2 mv, the volume of the terminal device is turned down by two steps. It should be understood that numbers and functions in an embodiment of the present disclosure may be preset, for example, may be preset depending on the type of a terminal device, or may be configured by a user, which is not specifically limited in the embodiment of the present disclosure.

It can be found that, in the embodiment of the present disclosure, a pressure sensing module triggers an instruction to avoid the use of a mechanical button, which could solve problems that the mechanical button has a single function, is easy to be damaged, and is difficult to be designed to be waterproof, thereby improving user experience effectively. Further, a plurality of pressure sensors are provided in a pressure sensing module, thereby further enriching triggerable instructions of the pressure sensing module, and improving user experience.

In the embodiment of the present disclosure, the inner side of the fingerprint sensing module may refer to a side close to a center of the terminal device.

It should be noted that in the embodiment of the present disclosure, each pressure sensing module may be associated with one type of instruction, that is, each pressure sensor in a pressure sensing module may be associated with an instruction of this type, for example, one pressure sensor is associated with a volume up instruction, and another pressure sensor is associated with a volume down instruction. It is also possible that a plurality of pressure sensing modules may be associated with one type of instruction, that is, each pressure sensing module is associated with an instruction of this type, for example, one pressure sensing module is associated with a volume up instruction, and another pressure sensing module is associated with a volume down instruction.

It should also be understood that the pressure sensing module in the embodiment of the present disclosure may be any sensing module or circuit module capable of implementing pressure sensing, for example, a capacitive pressure sensing module, a resistive pressure sensing module, an inductive pressure sensing module, an optical pressure sensing module, or the like.

The design method of a pressure sensor is described below by taking the above at least one fingerprint sensing module being two fingerprint sensing modules as an example with reference to the accompanying drawings.

FIG. 4 is a front view of a terminal device 200 according to an embodiment of the present application.

As shown in FIG. 4, the terminal device 200 includes:
a first fingerprint sensing module 201, a first pressure sensing module 202, a processor 203, a second fingerprint sensing module 204 and a second pressure sensing module 205, where the first pressure sensing module 201 is adjacent to the second fingerprint sensing module 202 and is in an inner side of the second fingerprint sensing module 202, and configured to receive pressure transmitted by the second fingerprint sensing module 202; and the second pressure sensing module 205 is adjacent to the second fingerprint sensing module 204 and is in an inner side of the second fingerprint sensing module 204, and configured to receive pressure transmitted by the second fingerprint sensing module 204.

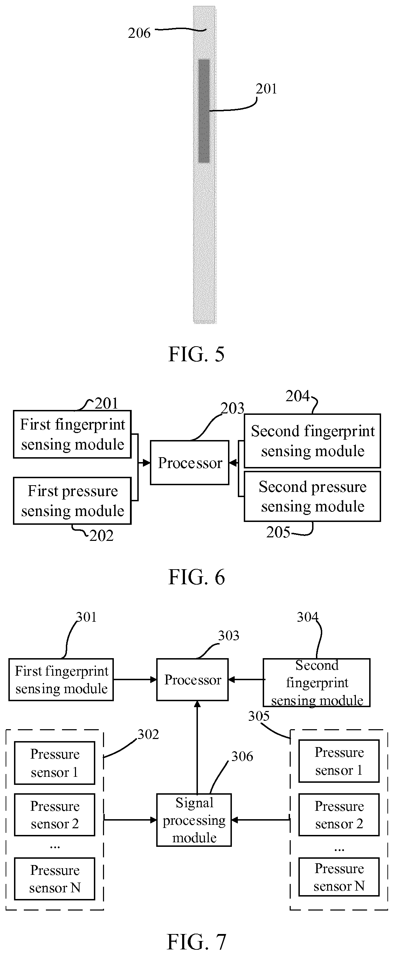

FIG. 5 is a right side view of FIG. 4.

It can be found that only the first fingerprint sensing module 201 can be seen by a user on a right side 206 of a terminal device, and the first pressure sensing module 202 is built in the terminal device 200 and is not exposed outside the terminal device 200, which not only improves user experience and reduces a waterproof design difficulty, but also is beautiful and durable.

FIG. 6 is a schematic block diagram of a terminal device 200 according to an embodiment of the present disclosure.

As shown in FIG. 6, a processor 203 may receive fingerprint information from a first fingerprint sensing module 201 and a second fingerprint sensing module 204 for fingerprint identification, and the processor 203 may also receive a sensing signal from a first pressure sensing module 202 and a second pressure sensing module 205 for triggering a system instruction or an application instruction. Specifically, a user's finger transmits pressure to the first pressure sensing module 202 by pressing the first fingerprint sensing module 201, and transmits pressure to the second pressure sensing module 205 by pressing the second fingerprint sensing module 204.

It will be understood by those skilled in the art that, for convenience of explanation, FIG. 4, FIG. 5 and FIG. 6 are only examples of an embodiment of the present disclosure, and the embodiment of the present disclosure is not limited to the drawings. For example, FIG. 6 merely shows one processor. In an actual terminal device, there may be multiple processors. For another example, in the embodiment of the present disclosure, at least one fingerprint sensing module may be or may not be in one-to-one correspondence with at least one pressure sensing module. More specifically, for example, the number of fingerprint sensing modules in a terminal device is greater than the number of pressure sensing modules, that is, a pressure sensing module is disposed in an inner side of a part of the fingerprint sensing modules, and a pressure sensing module may not be disposed in an inner side of another part of the fingerprint sensing modules.

It should be noted that, in the embodiment of the present disclosure, a sensing signal sensed by a pressure sensing module is a digital signal, while an electrical signal such as a current signal or a voltage signal belongs to an analog signal. A processor may associate the digital signal of the pressure sensing module with a trigger command. It is also possible to add a signal processing module dedicated to converting a digital signal into an electrical signal in a terminal device. This is not limited by the embodiment of the present application.

By way of example and not limitation, the terminal device may further include: at least one signal processing module, where the at least one pressure sensing module is connected to the processor through the at least one signal processing module, and each of the at least one signal processing module is configured to convert a pressure signal output by a pressure sensing module into an electrical signal, so that the processor generates an instruction according to the electrical signal converted by the at least one signal processing module.

For example, a first pressure sensing module of the at least one pressure sensing module is connected to a processor by a first signal processing module of the at least one signal processing module. When the first pressure sensing module senses a digital signal (a pressure signal) of 1 newton (N), the first signal processing module converts the digital signal of 1 N into an electrical signal of a certain value, and after the processor receives the electrical signal, a system instruction (such as a volume adjustment instruction) or an application instruction (such as a gaming instruction, a photographing instruction, etc.) associated with the first pressure sensing module is triggered.

It can be understood that the instruction may be generated by the processor according to an electrical signal converted by the at least one signal processing module and mapping relationship information, where the mapping relationship information includes a correspondence between a plurality of electrical signals and a plurality of instructions, and the plurality of electrical signals include the electrical signal converted by the at least one signal processing module. The plurality of instructions include, but are not limited to, at least one volume adjustment instruction, at least one screen brightness adjustment instruction, and at least one application operation instruction.

For example, for a pressure sensing module associated with a volume adjustment instruction, a correspondence between a plurality of pressure data and a plurality of volume adjustment instructions may be set, and when a processor receives a pressure signal of the pressure sensing module, a volume adjustment instruction corresponding to the pressure signal can be determined according to the correspondence between the plurality of pressure data and the plurality of volume adjustment instructions.

The design method of a signal processing module will be described below with reference to the accompanying drawings.

Optionally, the at least one pressure sensing module is in one-to-one correspondence with the at least one signal processing module, or the number of the at least one pressure sensing module is greater than the number of the at least one signal processing module.

For example, a plurality of pressure sensing modules correspond to one signal processing module.

Specifically, as shown in FIG. 7, a first pressure sensing module 302 and a second pressure sensing module 305 share a signal processing module 306. That is, the first pressure sensing module 302 and the second pressure sensing module 305 respectively need to send sensed pressure signals to the signal processing module 306; and the signal processing module 306 respectively converts the pressure signals sensed by the first pressure sensing module 302 and the second pressure sensing module 305 into electrical signals, and then sends the electrical signals to a processor 303.

More specifically, as shown in FIG. 7, the first pressure sensing module 302 may further include N pressure sensors, and the first pressure sensing module 302 may further be disposed in an inner side of a first fingerprint sensing module 301. The second pressure sensing module 305 may further include N pressure sensors, and the second pressure sensing module 305 may further be disposed in an inner side of a second fingerprint sensing module 304.

For another example, a pressure sensing module corresponds to a signal processing module.

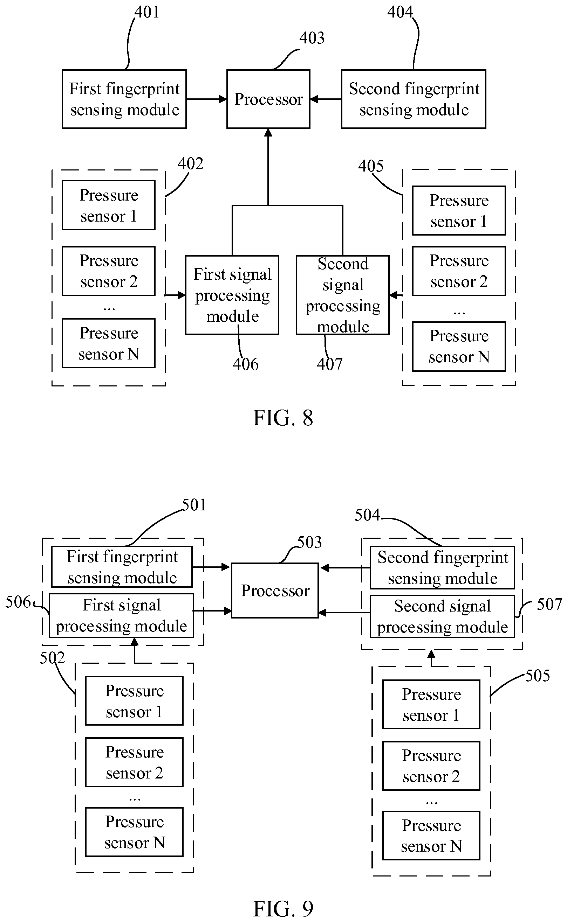

Specifically, as shown in FIG. 8, a first pressure sensing module 402 and a second pressure sensing module 405 respectively correspond to a first signal processing module 406 and a second signal processing module 407. That is, the first pressure sensing module 402 and the second pressure sensing module 405 respectively need to send sensed electrical signals to the first signal processing module 406 and the second signal processing module 407; and the first signal processing module 406 converts the pressure signal sensed by the first pressure sensing module 402 into an electrical signal, and then sends the electrical signal to a processor 403, and the second signal processing module 407 converts the pressure signal sensed by the second pressure sensing module 405 into an electrical signal, and then sends the electrical signal to the processor 403.

More specifically, as shown in FIG. 8, the first pressure sensing module 402 may further include N pressure sensors, and the first pressure sensing module 402 may further be disposed in an inner side of a first fingerprint sensing module 401. The second pressure sensing module 405 may further include N pressure sensors, and the second pressure sensing module 405 may further be disposed in an inner side of a second fingerprint sensing module 404.

It should be understood that the structures of FIG. 7 and FIG. 8 are only one possible form, that is, an embodiment of the present disclosure is not limited thereto, and the embodiment of the present disclosure does not exclude other forms of terminal device structures that may appear in the future. For example, the division of the modules is only a logic function division, other division modes may be adopted in practice, e.g., multiple modules or components may be combined or integrated in another system, or some characteristics may be omitted or be not executed. As another point, the displayed or discussed mutual coupling or direct coupling or communication connection may be indirect coupling or communication connection via some interfaces, apparatuses or modules, and may be in electrical, mechanical or other forms. For example, coupling between a fingerprint sensing module and a pressure sensing module may be in a mechanical connection form, and for another example, coupling between a pressure sensing module and a signal processing module may be in an electrical connection form.

It will be apparent to those skilled in the art that the above modules described as separate parts may or may not be physically separate, and parts displayed as modules may or may not be physical units, i.e., may be located in one position. That is, functional modules in various embodiments of the present disclosure may be integrated into a processing unit, or each module may exist alone physically, or two or more than two modules may be integrated into one unit. A part of or all of the modules may be selected to achieve the purposes of the present embodiments according to actual demands.

For example, one or more of the at least one signal processing module in the embodiment of the present disclosure are integrally disposed with one or more of the at least one fingerprint sensing module.

Specifically, as shown in FIG. 9, a first signal processing module 506 and a first fingerprint sensing module 501 may be integrally disposed and connected to a processor 503, and a second signal processing module 507 and a second fingerprint sensing module 504 may be integrally disposed and connected to the processor 503.

More specifically, as shown in FIG. 9, a first pressure sensing module 502 may further include N pressure sensors, and the first pressure sensing module 502 may be further disposed in an inner side of a module formed by integration of the first signal processing module 506 and the first fingerprint sensing module 501. The second pressure sensing module 505 may further include N pressure sensors, and the second pressure sensing module 505 may further be disposed in an inner side of a module formed by integration of the second fingerprint sensing module 504 and the second signal processing module 507.

The foregoing embodiments may be implemented in whole or in part by software, hardware, firmware, or any other combination thereof. When implemented using software, the above embodiments may be implemented in whole or in part in the form of a computer program product. The computer program product includes one or more computer instructions or computer programs. When the computer instructions or computer programs are loaded or executed on a computer, procedures or functions described in accordance with the embodiments of the present application are generated in whole or in part. The computer may be a general purpose computer, a special purpose computer, a computer network, or another programmable apparatus. The computer instructions may be stored in a computer readable storage medium or transferred from one computer readable storage medium to another computer readable storage medium, for example, the computer instructions may be transferred from a website, computer, server or data center to another website, computer, server, or data center in a wired (such as, infrared, wireless, microwave, etc.) manner. The computer readable storage medium may be any available medium that can be accessed by a computer, or a data storage device that includes a server, a data center, or the like that is integrated by one or more available media. The available medium may be a magnetic medium (such as, a floppy disk, a hard disk, a magnetic tape), an optical medium (such as, a DVD), or a semiconductor medium or the like. The semiconductor medium may be a solid state hard drive.

For example, a terminal device in an embodiment of the present disclosure may include not only a processor, but also a memory for storing a computer program (also referred to as code, or an instruction), where the computer program includes an instruction (a system instruction or an application instruction) involved in the terminal device of the above embodiments for execution. The processor is used to invoke and execute an instruction stored in the memory.

It can be understood that, in an embodiment of the present disclosure, a processor may be an integrated circuit chip with a signal processing capacity. In the implementation process, various functions of the above embodiments may be completed by an integrated logic circuit of hardware in the processor or an instruction in the form of software. The processor may be a general-purpose processor, a digital signal processor (Digital Signal Processor, DSP), an application specific integrated circuit (Application Specific Integrated Circuit, ASIC), a field programmable gate array (Field Programmable Gate Array, FPGA), or other programmable logic devices, a transistor logic device, and a discrete hardware component. The general purpose processor may be a microprocessor, or the processor may also be any conventional processor or the like. In other words, the processor in the embodiment of the present disclosure may be directly embodied as a hardware decoding processor, or a decoding processor combining hardware and software modules. The software modules may be located in a storage medium that is well established in the art. The storage medium is located in a memory, and the processor reads information in the memory and implements the various embodiments described above in conjunction with the hardware.

Likewise, the memory may be either volatile memory or non-volatile memory, or may include both volatile and nonvolatile memory. The non-volatile memory may be a read-only memory (Read-Only Memory, ROM), a programmable ROM (Programmable ROM, PROM), an erasable PROM (Erasable PROM, EPROM), or an electrically EPROM (Electrically EPROM, EEPROM) or a flash memory. The volatile memory may be a random access memory (Random Access Memory, RAM) that acts as an external cache. Among them, RAM includes but is not limited to: a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDR SDRAM), an enhanced SDRAM (Enhanced SDRAM, ESDRAM), a synch link DRAM (Synch Link DRAM, SLDRAM) and a direct Rambus RAM (Direct Rambus RAM, DR RAM).

Persons of ordinary skill in the art may be aware that the various exemplary components described in conjunction with the embodiments disclosed herein can be implemented by electronic hardware or a combination of computer software and electronic hardware. Whether these functions are implemented in the form of hardware or software is determined by specific applications and design constraint conditions of the technical solutions. For those of skill in the art, the described functions may be realized for each specific application by using different methods, but the realization should not be considered as going beyond the scope of the embodiment of the present disclosure.

It should also be understood that, for clarity and brevity of description, the forgoing modules and components may or may not be physically separated. A part of or all of the elements may be selected to achieve the purposes of embodiments of the present disclosure according to actual demands. For example, the memory may be integrated into a processor or may be disposed separately from the processor.

Finally, it should be noted that terms used in embodiments of the present disclosure and the claims appended hereto are merely for the purpose of describing particular embodiments, and are not intended to limit the embodiments of the present disclosure.

For example, the use of a singular form of "a", "the" and "said" in the embodiments of the present disclosure and the claims appended hereto are also intended to include the plural form, unless otherwise clearly indicated herein by context. For another example, terms of "first" and "second" may be used in embodiments of the present disclosure, but the components shall not be limited to these terms. These terms are only used to distinguish one component from another. For another example, the words "when..." as used herein may be construed to mean "in case of' or "if' or "when/upon" or "in response to determining" or "in response to detecting", depending on the context. Similarly, the phrase "if it is determined" or "if (a stated condition or event) is detected" may be construed to mean "upon determining" or "in response to determining" or "upon detecting (the stated condition or event)" or "in response to detecting (the stated condition or event)", depending on the context.

The forgoing contents are merely specific implementations of the present disclosure, but the protection scope of the present disclosure is not limited thereto. Any change or substitution that is readily conceived for any one skilled in the art within the technical scope disclosed by embodiments of the present disclosure shall fall into the protection scope of the embodiments of the present disclosure. Therefore, the protection scope of embodiments the present disclosure shall be defined by the claims.

## Claims

1. A terminal device, comprising:
at least one fingerprint sensing module disposed on at least one side face of the terminal device, wherein each of the at least one fingerprint sensing module is configured to acquire fingerprint information; and
a processor connected to the at least one fingerprint sensing module and configured to perform fingerprint identification according to fingerprint information acquired by one or more of the at least one fingerprint sensing module.

2. The terminal device according to claim 1, wherein the terminal device further comprises:
at least one pressure sensing module, wherein each pressure sensing module is adjacent to a fingerprint sensing module of the at least one fingerprint sensing module and is in an inner side of an adjacent fingerprint sensing module, and is configured to receive pressure transmitted by the adjacent fingerprint sensing module.

3. The terminal device according to claim 2, wherein the at least one pressure sensing module is in one-to-one correspondence with the at least one fingerprint sensing module.

4. The terminal device according to claim 2 or 3, wherein the terminal device further comprises:
at least one signal processing module, wherein the at least one pressure sensing module is connected to the processor through the at least one signal processing module, and each of the at least one signal processing module is configured to convert a pressure signal output by a pressure sensing module into an electrical signal, so that the processor generates an instruction according to the electrical signal converted by the at least one signal processing module.

5. The terminal device according to claim 4, wherein the at least one pressure sensing module is in one-to-one correspondence with the at least one signal processing module, or the number of the at least one pressure sensing module is greater than the number of the at least one signal processing module.

6. The terminal device according to claim 4 or 5, wherein one or more of the at least one signal processing module are integrally disposed with one or more of the at least one fingerprint sensing module.

7. The terminal device according to any one of claims 2 to 6, wherein each of the at least one pressure sensing module comprises at least one pressure sensor.

8. The terminal device according to any one of claims 4 to 7, wherein the instruction is generated by the processor according to an electrical signal converted by the at least one signal processing module and mapping relationship information, wherein the mapping relationship information includes a correspondence between a plurality of electrical signals and a plurality of instructions, and the plurality of electrical signals include the electrical signal converted by the at least one signal processing module.

9. The terminal device according to claim 8, wherein the plurality of instructions comprise: at least one volume adjustment instruction, at least one screen brightness adjustment instruction, and at least one application operation instruction.

10. The terminal device according to any one of claims 1 to 9, wherein the processor is configured to:
generate a screen unlocking instruction or an application decrypting instruction when the fingerprint information acquired by the one or more of the at least one fingerprint sensing module matches recorded fingerprint information;
or,
generate a payment instruction when the fingerprint information acquired by each of the at least one fingerprint sensing module matches recorded fingerprint information.

11. The terminal device according to any one of claims 1 to 10, wherein the at least one fingerprint sensing module is two fingerprint sensing modules, and two pressure sensing modules of the terminal device are located in inner sides of the two fingerprint sensing modules, respectively.
